Europäisches Patentamt

European Patent Office

Office européen des brevets

(11) Publication number: **0 468 552 A2**

# EUROPEAN PATENT APPLICATION

(21) Application number: **91201304.2**

(22) Date of filing: **30.05.91**

(51) Int. Cl.5: **A21D 2/18**, A21D 2/16

(30) Priority: **06.06.90 US 533986**

(43) Date of publication of application:
**29.01.92 Bulletin 92/05**

(84) Designated Contracting States:
**AT BE CH DE DK ES FR GB IT LI LU NL SE**

(71) Applicant: **MERCK & CO. INC.**
**126, East Lincoln Avenue P.O. Box 2000**
**Rahway New Jersey 07065-0900(US)**

(72) Inventor: **Lawson, Margaret A.**
**3559 Ruffin Road, Apt 160**
**San Diego, California 92123(US)**
Inventor: **Lin, Shao Wen**
**5447 Bengal Court,**
**San Diego, California 92124(US)**

(74) Representative: **Barrett-Major, Julie Diane et al**
**Merck & Co., Inc. European Patent**
**Department Terlings Park Eastwick Road**
**Harlow Essex CM20 2OR(GB)**

(54) Shortening substitute for bakery products.

(57) Described are dry blend fat substitutes comprising xanthan gum and one or more additional ingredients including other gums, proteins, salts, acidulants, alkaline agents, and emulsifiers. These blends replace up to 100% of the shortening in bakery products.

EP 0 468 552 A2

## BACKGROUND OF THE INVENTION

This invention relates to fat substitutes in dry food blends or mixes. More particularly, this invention relates to dry blends comprising xanthan gum or modified xanthan gum as shortening substitutes useful in the preparation of bakery products.

Fats play an important role in a healthy diet as a solvent for fat-soluble vitamins and a concentrated energy source. In addition, fats provide foods with desirable texture and organoleptic characteristics. For instance, the shortening (fat) functions to entrap air in the form of small bubbles during preparation of the cake batter. At elevated temperatures during baking, the shortening melts and results in air cells to which water vapor and released carbon dioxide migrate and expand to provide the volume and fine, uniform cell structure. However, excessive consumption of fat has been related to health problems such as obesity and heart disease. High consumption of animal fats is of particular concern in that such fats are rich sources of cholesterol. As a result, many Americans seek to reduce their fat, cholesterol and caloric intake. The removal of shortening from a cake formula reduces the calories of the final products. However, it also causes poor baking volume, firm texture and uneven cell structure, which results in unacceptable organoleptic properties and loss of commercial value. Therefore, there is a great demand for edible, low calorie or calorie-free natural fat substitutes.

At present there are three primary types of fat substitutes that are either being commercially available or have been extensively investigated. They are synthetic compounds (derivatives of sucrose polyester), carbohydrate based fat substitutes (maltodextrin, tapioca dextrin, etc.) and protein based fat substitutes (NutraSweet's Simplesse and Kraft's milk protein/xanthan gum complex). Each has unique characteristics and limitations which make them particularly well suited in a narrow band of the broad spectrum of processed foods.

It is known that anionic polysaccharides complex with protein under acidic conditions. The resulting complexes are said to have good emulsifying and thickening effects. For example, U.S. Patent No. 2,430,180 describes a process to make an algino-gelatin compound which may be used to stabilize and emulsify the fatty material in ice cream mixes or chocolate milk products.

U.S. Patent 3,407,076 discloses a process similar to that of U.S. Patent 2,430,180 for making a water soluble anionic polysaccharide (carboxy methyl cellulose (CMC)) and soy globulin complex for use in whipped toppings preparation.

Huebner and Wall (Cereal Chem. 56(2):68-73) demonstrate the interaction between gluten and xanthan gum and suggest the gum's use as a scavenger for proteins in dilute waste water solutions or in texturized protein foods.

UK Patent 2,021,140 suggests blending soft butter, vegetable oil with water and water soluble gelling agents, such as gelatin, CMC, xanthan gum, and sodium alginate, to make a butter substitute.

U.S. Patent No. 4,431,681 discloses a method of preparing a high quality, calorie-reduced cake. Xanthan gum, alginate and carrageenan among others, are used as water binders, and thickeners to make a low calorie diet bread preparation. In comparison with a conventional bread dough formula, the low calorie diet bread dough contains a higher vital gluten content and CMC.

U.S. Patent 4,308,294 relates to a process of mixing a protein and emulsifiers with an acidified starch phase to make an oil replacer.

U.S. Patent 4,734,287 (Process to making NutraSweet's SIMPLESSE) relates to a protein microparticulation process. Xanthan gum is included in the preparation of SIMPLESSE--apparently as a stabilizer. Indeed, the FDA states that "it is routinely necessary to use gums such as xanthan gum to stabilize the particle to maintain sensory properties." (Food Chemical News, PP. 53, February 26, 1990). U.S. 4,734,287 indicates that the fat mimicking properties of the disclosed fat substitute are related to the particle size distribution of the protein micro-spheres. In bakery products among others, there is no evidence that these micro-spheres remain intact in the baked product.

Kraft's fat substitute is based on EP 0 034 035 and U.S. Patent Nos. 4,559,233 and 4,563,360. EP 0 034 035 discloses the use of xanthan/protein complex dispersions as a fat or oil substitute. Disclosed is a method of preparation of microfragmented ionic polysaccharide/protein complex aqueous dispersions. The method involves the preparation of ionic polysaccharide/protein precipitate and subsequent fragmentation of the complex to reduce its size to less than about 15 microns. Although all of the ingredients used are GRAS, due to the nature of the treatment, it is necessary to obtain FDA's GRAS approval for the fat substitute. Furthermore, "the cake product (containing this fat substitute) has a finer, dense grain, lighter crust color, decreased volume and a very firm texture in comparison to a typical control product utilizing shortening (fat) in place of the microfragmented anisotropic xanthan/protein dispersion."

It is an object of the instant invention to produce a fat substitute for which there is no need to apply for GRAS status.

It is an object of the instant invention to produce a fat substitute for use in the baking industry.

It is an object of the instant invention to produce a shortening substitute for use in the baking industry which will result in baked products, especially cakes, having a similar baking volume, cake density, fine and uniform cell structure and comparable organoleptic properties to full-fat cakes.

It is an object of the instant invention to mimic fat by affecting interactions between such bakery ingredients as flour gluten, milk and/or egg proteins, emulsifiers, and added polysaccharides.

Further advantages and objects of the inventors will be apparent from the description of the invention, examples, drawings, and claims appended hereto.

SUMMARY OF THE INVENTION

The invention encompasses dry blend fat substitutes comprising one or more xanthan gums and one or more additional ingredients including other gums, proteins, salts, acidulants, alkaline agents, and emulsifiers. These blends may replace up to 100% of the shortening in bakery products, such as layer cakes, muffins, devil's food cakes, cookies and doughnuts.

BRIEF DESCRIPTION OF THE DRAWINGS

Fig. 1 illustrates the effect of KELTROL F concentration on the viscosity of KELTROL F and KELTROL F/NFMS dispersions, measured on a Brookfield Viscometer at 50 rpm.

Fig. 2 illustrates the effect of KELTROL F concentration on the viscosity of KELTROL F and KELTROL F/NFMS dispersions, measured on a Brookfield Viscometer at 5 rpm.

Fig. 3 is electrophoretic mobilities versus pH curves of an embodiment of KELTROL TF, and gum arabic dispersions, and KELTROL TF/gum arabic, Keltrol TF/SSL and KELTROL TF/lecithin complexes.

Fig. 4 is electrophoretic mobilities versus pH curves of an embodiment of KELTROL TF and BI-PRO whey protein dispersions and KELTROL TF/BI-PRO complex.

DETAILED DESCRIPTION OF THE INVENTION

In one embodiment, the invention encompasses dry blend fat substitutes comprising one or more xanthan gums and at least one ingredient selected from the group of ingredient categories consisting of:

(a) one or more other gums, such as gum arabic, propylene glycol alginate (PGA), guar gum, locust bean gum, gellan gum, alginates, carrageenan, maltodextrin and carboxymethyl cellulose (CMC);

(b) one or more proteins such as non-fat milk solids (NFMS), whey proteins, soy proteins, caseinate, whole egg, egg white, cotton seed protein, and yeast; and

(c) one or more emulsifiers such as mono-diglycerides, sodium stearoyl lactylate, lecithin, sorbitan monostearate, POLYSORBATE-60 and diacetyl tartaric acid ester of monoglycerides.

Xanthan gums suitable for the intended purpose of sparing shortening in bakery products include, but are not limited to KELTROL-F, KELTROL-TF, and KELTROL-SF. KELTROL is a registered trademark of xanthan gum products manufactured by Kelco, Division of Merck and Co. Inc., at San Diego, California. KELTROL-F is a fine-mesh, non-clarified xanthan gum. KELTROL-TF is a fine-mesh, clarified xanthan gum. KELTROL-SF is a special grade of xanthan gum with altered rheology characteristics.

POLYSORBATE-6- is one of a series of poly(oxy-1,2ethanediyl) derivitives of sorbitan monooctadecanoate.

As will be appreciated by those of skill in the art, each of the ingredient categories of "xanthan gum", "other gums", "proteins" and "emulsifiers" are described in a manner to indicate that more than one ingredient from any/each category may be included in the blend. For example, the ingredient category xanthan gum may comprise both KELTROL-F and KELTROL-TF.

In one genus of the first embodiment the xanthan gum is selected from the group consisting of KELTROL-F, KELTROL-TF, and KELTROL-SF or an equivalent thereof,

(a) the other gums are selected from the group consisting of gum arabic, alginates, propylene glycol alginates, guar gum, gellan gum, CMC, carrageenan, and locust bean gum;

(b) the proteins are selected from the group consisting of NFMS, whey proteins, soy proteins, caseinate, whole egg and egg white, cotton seed proteins, gelatin and yeast; and

(c) the emulsifiers are selected from the group consisting of one or more emulsifiers such as mono-diglycerides, sodium stearoyl lactylate, lecithin, sorbitan monostearate, POLYSORBATE-60 and diacetyl tartaric acid ester of monoglycerides.

EP 0 468 552 A2

One class of this genus further comprises salts, bases and acids selected from sodium chloride, polyphosphates, pyrophosphates, orthophosphates, sodium hydroxide, sodium bicarbonate, citric acid, lactic acid, succinic acid, tartaric acid and hydrochloric acid.

A second class of this genus encompasses dry blends containing on a moisture free basis:

(a) 5 to 100 parts by weight of xanthan gum selected from the group consisting of KELTROL-F, KELTROL-TF and KELTROL-SF, or an equivalent thereof;

(b) 0 to 95 parts by weight of other gums selected from the group consisting of gellan gum, CMC, gum arabic, guar gum, PGA, alginates, locust bean gum and carrageenan;

(c) 0 to 95 parts be weight of proteins selected from the group consisting of NFMS, whey proteins, egg white, soy proteins, cottonseed proteins, gelatin, caseinates, and yeast;

(d) 0 to 95 parts by weight of emulsifiers selected from the group consisting of one or more emulsifiers such as mono-diglycerides, sodium stearoyl lactylate, lecithin, sorbitan monostearate, POLYSORBATE-60 and diacetyl tartaric acid ester of monoglycerides.

A third class of this genus encompasses dry blends comprising xanthan gum, other gums, and emulsifiers wherein the weight ratio is 5 to 30 parts of xanthan gum, 5 to 25 parts of other gum, and 40 to 70 parts of emulsifier.

Exemplifying this class are dry blend fat substitute consisting essentially of:

(a) fine mesh clarified xanthan gum, guar gum and sodium stearoyl lactate, in a weight ratio of 14 part of xanthan, 14 parts of guar gum and 72 parts of sodium stearoyl lactate; or

(b) fine mesh clarified xanthan gum, guar gum and sodium stearoyl lactate, in a weight ratio of 8 part of xanthan, 20 parts of guar gum and 72 parts of sodium stearoyl lactate; or

(c) fine mesh clarified xanthan gum, gum arabic and sodium stearoyl lactate, in a weight ratio of 17 part of xanthan, 17 parts of guar gum and 66 parts of sodium stearoyl lactate; or

(d) fine mesh clarified xanthan gum, gum arabic and sodium stearoyl lactate, in a weight ratio of 25 part of xanthan, 8 parts of gum arabic and 67 parts of sodium stearoyl lactate; or

(e) fine mesh clarified xanthan gum, guar gum, gellan gum and sodium stearoyl lactate, in a weight ratio of 12.5 part of xanthan, 12.5 parts of guar gum, 8 parts of gellan gum and 67 parts of sodium stearoyl lactate; or

(f) fine mesh clarified xanthan gum, gum arabic, gellan gum and sodium stearoyl lactate, in a weight ratio of 15 part of xanthan, 15 parts of gum arabic, 8 parts of gellan gum and 62 parts of sodium stearoyl lactate; or

(g) fine mesh clarified xanthan gum, guar gum, gum arabic, and sodium stearoyl lactate, in a weight ratio of 11 part of xanthan, 11 parts of guar gum, 11 parts of gum arabic and 67 parts of sodium stearoyl lactate; or

(h) fine mesh clarified xanthan gum, gum arabic, maltodextrin arabic, and sodium stearoyl lactate, in a weight ratio of 14 part of xanthan, 14 parts of gum arabic, 14 parts of maltodextrin and 58 parts of sodium stearoyl lactate; or

(i) fine mesh clarified xanthan gum, gum arabic, guar gum, maltodextrin arabic, and sodium stearoyl lactate, in a weight ratio of 10 part of xanthan, 10 parts of gum arabic, 10 parts of guar gum, 14 parts of maltodextrin and 47 parts of sodium stearoyl lactate.

A second embodiment of the invention encompasses shortening sparing baking compositions comprising on a formulation basis up to 1.0 weight percent, and more typically .015 to .60% of a dry blend fat substitute in accordance with any of the definitions of the dry blend fat substitutes as provided above.

A subgenus of this embodiment encompasses shortening sparing baking compositions comprising on a formulation basis:

(a) 15 to 25 parts by weight of flour, such as bleached and enriched cake flour;

(b) 20 to 45 parts by weight of sugar, such as sucrose and/or lactose such as from NFMS;

(c) 0 to 25 parts by weight of cake shortening;

(d) 1.5 to 15.0 parts by weight of protein from one or more sources, such as gluten, NFMS, whey proteins, egg proteins, soy proteins, caseinates, cotton seed proteins, gelatin and yeast;

(e) 1.0 to 3.0 parts by weight of emulsifiers, such as mono-diglycerides, sodium stearoyl lactylate, lecithin, sorbitan monostearate, POLYSORBATE-60 and diacetyl tartaric acid ester of monoglycerides;

(f) 0.025 to 0.5 parts by weight of one or more xanthan gums;

(g) 0 to 0.5 parts by weight one or more of the other gums selected from the group consisting of gum arabic, alginates, propylene glycol alginates, guar gum, gellan gum, CMC, carrageenan, and locust bean gum;

(h) 1.0 to 2.0 parts by weight of baking powder, such as baking soda, monocalcium phosphate, sodium aluminum sulfate, calcium sulfate, calcium acid phosphate and sodium acid pyrophosphate;

4

(i) 0.5 to 1.5 parts by weight of sodium chloride;

(j) 15 to 50 parts by weight of water.

In a genus of this embodiment, the shortening sparing baking composition comprises on a formulation basis:

(a) 15 to 25 parts by weight of flour, such as bleached and enriched cake flour (e.g. Swan's Down, manufactured by Wm.B. Reily & Co. Inc., CA 70130);

(b) 20 to 45 parts by weight of sugar, such as granular sucrose (e.g. Baker's special, C & H Sugar, CA 94520);

(c) 0 to 15.0 parts by weight of shortening which is SER cake shortening consisting of hydrogenated soybean, cottonseed and palm oil, and mono-diglycerides and POLYSORBATE-60;

(d) 1.5 to 15.0 parts by weight of protein from one or more sources, such as gluten of the cake flour, NFMS (e.g. Instantized, Land O'Lakes, MN 55440), spray dried whole egg solids (e.g. W-1-FF, Henningsen Foods Inc., NY 10604) and spray dried egg white (P-20, Henningsen Food Inc., NY 10604);

(e) 1.0 to 3.0 parts by weight of emulsifiers, such as KAKEMATE cake emulsifier consisting of sorbitan monosterate, mono-diglycerides, POLYSORBATE-60, (Mallet & Co., Inc., PA 15106), sodium stearoyl lactylate, (e.g. Emplex, Patco Products, C.J. Patterson Co., MO 64111) and soybean lecithin, (e.g. Centrolex F, Central Soya Company, Inc., IN, 46801);

(f) 0.025 to 0.5 parts by weight of xanthan gum, selected from one or more of KELTROL-F, KELTROL-TF, KELTROL-SF and equivalents thereof;

(g) 0 to 0.5 parts by weight of other gums selected from spray dried gum arabic (e.g. Gumix International Inc., NJ 07601), fine mesh SUPERCOL U guar gum, gellan gum (e.g. KELCOGEL, Kelco, Division of Merck & Co. Inc., CA 92123), PGA (Manucol Ester B5250, Kelco, Division of Merck & Co. Inc., CA 92123), CMC (e.g. 7HF Aqualon Co., DE 19850-5417), DARILOID 100, 300 and 400 gum blends, consisting, respectively, of xanthan gum/guar gum/locust bean gum, xanthan gum/guar gum/carrageenan, and guar gum/xanthan gum/carrageenan/locust bean gum (Kelco, division of Merck & Co., Inc., CA 92123);

(h) 1.0 to 2.0 parts by weight of baking powder, such as Calumet double acting baking powder consisting of baking soda, cornstarch, sodium aluminum sulfate, calcium sulfate and calcium acid phosphate (e.g. General Foods Corp., NY 10625), Fleischmann double acting baking powder consisting of sodium acid pyrophosphate, baking soda, cornstarch and monocalcium phosphate and Fleischmann Old Time baking powder comprising sodium aluminum phosphate, baking soda, cornstarch;

(i) 0.5 to 1.5 parts by weight of granular, food grade sodium chloride,

(j) 15 to 50 parts by weight of water.

In one class of this genus, the shortening sparing baking composition comprises on a formulation basis:

(a) 25 parts by weight of flour, such as bleached and enriched cake flour;

(b) 20 to 35 parts by weight of sugar, such as sucrose and/or lactose ;

(c) 0 to 2.7 parts by weight of cake shortening;

(d) 3.0 to 10.0 parts by weight of protein from one or more sources, such as gluten, NFMS, whey proteins, egg proteins, soy proteins, caseinates, cotton seed proteins, gelatin and yeast;

(e) 1.0 to 2.0 parts by weight of emulsifiers, such as mono-diglycerides, sodium stearoyl lactylate, lecithin, sorbitan monostearate, POLYSORBATE-60 and diacetyl tartaric acid ester of monoglycerides;

(f) 0.05 to 0.4 parts by weight of one or more xanthan gums;

(g) 0.05 to 0.4 parts by weight of one or more of the other gums selected from the group consisting of gum arabic, alginates, propylene glycol alginates, guar gum, gellan gum, CMC, carrageenan, and locust bean gum;

(h) 1.5 to 2.0 parts by weight of baking powder, such as baking soda, monocalcium phosphate, sodium aluminum sulfate, calcium sulfate, calcium acid phosphate and sodium acid pyrophosphate;

(i) 0.5 to 1.0 parts by weight of sodium chloride;

(j) 15 to 50 parts by weight of water.

A third embodiment of the invention encompasses shortening sparing baking compositions comprising on a formulation basis:

(a) 15 to 25 parts by weight of flour, such as bleached and enriched cake flour;

(b) 10 to 20 parts by weight of bread flour;

(c) 15 to 45 parts by weight of sugar, such as sucrose and/or lactose contained in NFMS;

(d) 0 to 20 parts by weight of cake shortening;

(e) 1.5 to 15.0 parts by weight of protein from one or more sources, such as gluten, NFMS, whey proteins, egg proteins, soy proteins, caseinates, cotton seed proteins, gelatin, and yeast;

(f) 1.0 to 3.0 parts by weight of emulsifiers, such as mono-diglycerides, sodium stearoyl lactylate, lecithin, sorbitan monostearate, POLYSORBATE-60 and diacetyl tartaric acid ester of monoglycerides;

(g) 0.02 to 0.4 parts by weight of one or more xanthan gum;

(h) 0 to 0.4 parts by weight one or more of the other gums selected from the group consisting of gum arabic, alginates, propylene glycol alginates, guar gum, gellan gum, CMC, carrageenan, and locust bean gum;

(i) 1.0 to 2.0 parts by weight of baking powder, such as baking soda, monocalcium phosphate, sodium aluminum sulfate, calcium sulfate, calcium acid phosphate and sodium acid pyrophosphate;

(j) 0.5 to 1.5 parts by weight of sodium chloride;

(k) 10 to 25 parts by weight of frozen blueberries or other fruits;

(l) 15 to 50 parts by weight of water.

In one genus of this embodiment, the shortening sparing baking composition comprises on a formulation basis:

(a) 15 to 25 parts by weight of flour, such as bleached and enriched cake flour (e.g. Swan's Down, Wm.B. Reily & Co., Inc., CA 70130)

(b) 10 to 20 parts by weight of bread flour, such as high-protein Gold Medal bread flour (General Mills, Inc., MN 55440);

(c) 15 to 45 parts by weight of sugar, such as granular sucrose (e.g. Baker's special, C & H Sugar, CA 94520);

(d) 0 to 15.0 parts by weight of shortening which is SER cake shortening consisting of hydrogenated soybean, cottonseed and palm oil, and mono-diglycerides and POYLSORBATE-60;

(e) 1.5 to 15.0 parts by weight of protein from one or more sources, such as gluten of the cake flour, NFMS (e.g. Instantized, Land O'Lakes, MN 55440), spray dried whole egg solids (e.g. W-1-FF, Henningsen Foods Inc., NY 10604) and spray dried egg white (P-20, Henningsen Food Inc., NY 10604);

(f) 1.0 to 3.0 parts by weight of emulsifiers, such as KAKEMATE cake emulsifier consisting of sorbitan monosterate, mono-diglycerides, POLYSORBATE-60, (Mallet & Co. Inc., PA 15106), sodium stearoyl lactylate, (e.g. Emplex, Patco Products, C.J. Patterson Co., MO 64111) and soybean lecithin (e.g. Centrolex F, Central Soya Company, Inc., IN, 46801);

(g) 0.02 to 0.4 parts by weight of xanthan gum, selected from one or more of KELTROL F, KELTROL-TF, KELTROL-SF and equivalents thereof;

(h) 0 to 0.4 parts by weight of other gums selected from spray dried gum arabic (e.g. Gumix International Inc., NJ 07601), fine mesh SUPERCOL U guar gum, gellan gum (e.g. KELCOGEL, Kelco, Division of Merck & Co. Inc., CA 92123), PGA (e.g. MANUCOL Ester B5250, Kelco, Division of Merck & Co. Inc., CA 92123), CMC (e.g. 7HF Aqualon Co., DE 19850-5417), DARILOID 100, 300 and 400 gum blends, consisting, respectively, of xanthan gum/guar gum/locust bean gum, xanthan gum/guar gum/carrageenan, and guar gum/xanthan gum/carrageenan/locust bean gum (Manufactured by Kelco, division of Merck & Co. Inc., CA 92123);

(i) 1.0 to 2.0 parts by weight of baking powder, such as CALUMET double acting baking powder consisting of baking soda, cornstarch, sodium aluminum sulfate, calcium sulfate and calcium acid phosphate (General Foods Corp., NY 10625), Fleischmann double acting baking powder consisting of sodium acid pyrophosphate, baking soda, cornstarch and monocalcium phosphate and Fleischmann OLD TIME baking powder comprising sodium aluminum phosphate, baking soda, cornstarch;

(j) 0.5 to 1.5 parts by weight of granular, food grade sodium chloride;

(k) 10 to 25 parts by weight of frozen blueberries or other fruits;

(j) 15 to 50 parts by weight of water.

In one class of this genus, the shortening sparing baking composition comprises on a formulation basis:

(a) 20 parts by weight of flour, such as bleached and enriched cake flour;

(b) 15 parts by weight of bread flour, such as high-protein Gold Medal bread flour, (General Mills, Inc., MN 55440);

(c) 25 to 30 parts by weight of sugar, such as sucrose and/or lactose such as from NFMS;

(d) 0 to 3 parts by weight of shortening which is SER cake shortening consisting of hydrogenated soybean, cottonseed and palm oil, and mono-diglycerides and POLYSORBATE-60;

(e) 1.5 to 15.0 parts by weight of protein from one or more sources, such as gluten of the cake flour, NFMS (e.g. Instantized, Land O'Lakes, MN 55440), spray dried whole egg solids (W-1-FF, Henningsen Foods Inc., NY 10604) and spray dried egg white (P-20, Henningsen Foods Inc., NY 10604);

(f) 1.0 to 2.0 parts by weight of emulsifiers, such as KAKEMATE cake emulsifier consisting of sorbitan monosterate, mono-diglycerides, POLYSORBATE-60, (Mallet & Co., Inc., PA 15106) sodium stearoyl lactylate, (e.g. Emplex, Manufactured by Patco Products, C.J. Patterson Co., MO 64111) and soybean lecithin (e.g. Centrolex F, Central Soya Company, In., IN 46801);

(g) 0.04 to 0.3 parts by weight of xanthan gum, selected from one or more of KELTROL F, KELTROL TF, KELTROL SF and equivalents thereof;

(h) 0 to 0.3 parts by weight of other gums selected from spray dried gum arabic, (e.g. Gumix International Inc., NJ 07601) fine mesh SUPERCOL U guar gum, gellan gum (KELCOGEL, Kelco, division of Merck & Co. Inc., CA 92123) PGA, (e.g. MANUCOL Ester B 5250, Kelco, Division of Merck & Co. Inc., CA 92123) CMC, (e.g. 7HF Aqualon Co. DE 19850-5417), DARILOID 100, 300 and 400 gum blends, consisting, respectively, of xanthan gum/guar gum/locust bean gum, xanthan gum/guar gum/carrageenan and guar gum/xanthan gum/carrageenan/locust bean gum, (Kelco, division of Merck & Co. Inc., CA 92123);

(i) 1.0 to 2.0 parts by weight of baking powder, CALUMET double acting baking powder consisting of baking soda, cornstarch, sodium aluminum sulfate, calcium sulfate and calcium acid phosphate (General Foods Corp., NY 10625), Fleischmann double acting baking powder consisting of sodium acid pyrophosphate, baking soda, cornstarch and monocalcium phosphate and Fleischmann OLD TIME baking powder comprising sodium aluminum phosphate, baking soda, and cornstarch;

(j) 0.5 to 1.0 parts by weight of granular, food grade sodium chloride;

(k) 10 to 25 parts by weight of frozen blueberries or other fruits;

(j) 15 to 50 parts by weight of water.

A fourth embodiment of the invention encompasses shortening sparing baking compositions comprising on a formulation basis:

(a) 15 to 25 parts by weight of flour, such as bleached and enriched cake flour;

(b) 20 to 45 parts by weight of sugar, such as sucrose and/or lactose contained in NFMS;

(c) 0 to 25 parts by weight of cake shortening;

(d) 1.5 to 15.0 parts by weight of protein from one or more sources, such as gluten, NFMS, whey proteins, egg proteins, soy proteins, caseinates, cotton seed proteins, gelatin and yeast;

(e) 1.0 to 3.0 parts by weight of emulsifiers, such as mono-diglycerides, sodium stearoyl lactylate, lecithin, sorbitan monostearate, POLYSORBATE-60 and diacetyl tartaric acid ester of monoglycerides;

(f) 0.025 to 0.5 parts by weight of one or more xanthan gum;

(g) 0 to 0.5 parts by weight one or more of the other gums selected from the group consisting of gum arabic, alginates, propylene glycol alginates, guar gum, gellan gum, CMC, carrageenan, and locust bean gum;

(h) 1.0 to 2.0 parts by weight of baking powder, such as baking soda, monocalcium phosphate, sodium aluminum sulfate, calcium sulfate, calcium acid phosphate and sodium acid pyrophosphate;

(i) 0.5 to 1.5 parts by weight of sodium chloride.

(j) 2.0 to 10.0 parts by weights of alkaline-treated cocoa powder.

(k) 15 to 50 parts by weight of water.

In one genus of this embodiment, the shortening sparing baking composition comprises on formulation basis:

(a) 15 to 25 parts by weight of flour, such as bleached and enriched cake flour (e.g. Swan's Down, Wm.B. Reily & Co., Inc., CA 70130);

(b) 20 to 45 parts by weight of sugar, such as granular sucrose (e.g. Baker's special, C & H Sugar, CA 94520);

(c) 0 to 15.0 parts by weight of shortening which is SER cake shortening consisting of hydrogenated soybean, cottonseed and palm oil, and mono-diglycerides and pOLYSORBATE-60;

(d) 1.5 to 15.0 parts by weight of protein from one or more sources, such as gluten of the cake flour, NFMS (e.g. Instantized, Land O'Lakes, MN 55440), spray dried whole egg solids (e.g. W-1-FF, Henningsen Foods Inc., NY 10604) and spray dried egg white (P-20, Henningsen Food Inc., NY 10604).

(e) 1.0 to 3.0 parts by weight of emulsifiers, such as KAKEMATE cake emulsifier consisting of sorbitan monosterate, mono-diglycerides, POLYSORBATE-60, (Mallet & Co., Inc., PA 15106) sodium stearoyl lactylate, (e.g. Emplex, Patco Products, C.J. Patterson Co., MO 64111) and soybean lecithin, (e.g. Centrolex F, Central Soya Company, Inc., IN, 46801);

(f) 0.025 to 0.5 parts by weight of xanthan gum, selected from one or more of KELTROL F, KELTROL-TF, KELTROL-SF and equivalents thereof;

(g) 0 to 0.5 parts by weight of other gums selected from spray dried gum arabic (e.g. Gumix International Inc., NJ 07601), fine mesh SUPERCOL U guar gum, gellan gum (e.g. KELCOGEL, Kelco, Division of Merck & Co. Inc., CA 92123), PGA (e.g. Manucol Ester B5250, Kelco, Division of Merck & Co., Inc., CA 92123), CMC (7HF Aqualon Co., DE 19850-5417), DARILOID 100, 300 and 400 gum blends, consisting, respectively, of xanthan gum/guar gum/locust bean gum, xanthan gum/guar gum/carrageenan, and guar gum/xanthan gum/carrageenan/locust bean gum (Kelco, division of Merck & Co. Inc., CA 92123).

(h) 1.0 to 2.0 parts by weight of baking powder, such as CALUMET double acting baking powder consisting of baking soda, cornstarch, sodium aluminum sulfate, calcium sulfate and calcium acid phosphate (e.g. Manufactured by General Foods Corp., NY 10625), Fleischmann double acting baking powder consisting of sodium acid pyrophosphate, baking soda, cornstarch and monocalcium phosphate and Fleischmann OLD TIME baking powder comprising sodium aluminum phosphate, baking soda, and cornstarch;

(i) 0.5 to 1.5 parts by weight of granular, food grade sodium chloride;

(j) 2.0 to 10.0 parts by weight of alkaline-treated cocoa powder;

(k) 15 to 50 parts by weight of water.

In one class of this genus, the shortening sparing baking composition comprises on a formulation basis:

(a) 25 parts by weight of flour, such as bleached and enriched cake flour;

(b) 20 to 35 parts by weight of sugar, such as sucrose and/or lactose contained in NFMS;

(c) 0 to 3.0 parts by weight of cake shortening;

(d) 3.0 to 10.0 parts by weight of protein from one or more sources, such as gluten, NFMS, whey proteins, egg proteins, soy proteins, caseinates, cotton seed proteins, gelatin and yeast;

(e) 1.0 to 2.0 parts by weight of emulsifiers, such as mono-diglycerides, sodium stearoyl lactylate, lecithin, sorbitan monostearate, POLYSORBATE-60 and diacetyl tartaric acid ester of monoglycerides;

(f) 0.05 to 0.4 parts by weight of one or more xanthan gum;

(g) 0.05 to 0.4 parts by weight of one or more of the other gums selected from the group consisting of gum arabic, alginates, propylene glycol alginates, guar gum, gellan gum, CMC, carrageenan, and locust bean gum;

(h) 1.5 to 2.0 parts by weight of baking powder, such as baking soda, monocalcium phosphate, sodium aluminum sulfate, calcium sulfate, calcium acid phosphate and sodium acid pyrophosphate;

(i) 0.5 to 1.0 parts by weight of sodium chloride;

(j) 2.0 to 5.0 parts by weight of alkaline-treated cocoa powder;

(k) 15 to 50 parts by weight of water.

In a preferred embodiment, the present invention provides a shortening sparing baking composition comprising on a formulation basis 0.01 to 0.80 weight percent of a dry blend fat substitute in accordance with the invention.

Particularly preferred is a shortening sparing baking composition comprising on a formulation basis 0.02 to 0.60 weight percent of a dry blend fat substitute in accordance with the invention.

## EXAMPLE 1. SYNERGISTIC INTERACTION OF PROTEIN/GUM COMPLEX

MATERIALS:

DARILOID 100 (DD-100), Lot #55143
DARILOID 300 (DD-300), Lot #57046
DARILOID 400 (DD-400), Lot #56034
KELTROL F (KTL-F), Lot #41988A
Non-fat Milk Solids (Land O' Lakes)
Dariloid 100 is a trademark of a blend consisting of xanthan gum, guar gum and locust bean gum manufactured by Kelco, Division of Merck & Co., Inc., San Diego, CA. Dariloid 300 is a trademark of a blend consisting of xanthan gum, guar gum and carrageenan manufactured by Kelco, Division of Merck & Co., Inc., San Diego, CA. Dariloid 400 is a trademark of a blend consisting of guar gum, xanthan gum, carrageenan and locust bean gum manufactured by Kelco, Division of Merck & Co., Inc., San Diego, CA.

DI water was used throughout the experiment.

PROCEDURES FOR PREPARATION:

PROCEDURE A

(1) 2% w/v gum solution: Mix 6 g gum in 300 ml water at 1000 rpm for 60 minutes.

(2) 18% w/v, NFMS solution: Mix 54 g NFMS in 300 ml water at 1000 rpm for 60 minutes.

(3) 20% solids, w/v, gum/NFMS suspension; Pre-mix 6 g gum with 54 g NFMS and then mix the powder in 300 ml water at 1000 rpm for 60 minutes.

(4) Heat treatment: while stirring at 1200 rpm, heat the suspensions in a "hot-cup" for 10 minutes. The final temperature was around 80-100 C.

PROCEDURE B

(1) 0.5, 1.0 And 1.5% KTL-F solution: Mix 1.25, 2.50 and 3.75 g KTL-F, respectively in 250 ml water at 650 rpm for 30 minutes.

(2) 25%, w/w, NFMS solution: Mix 62.5 g NFMS in 187.5 g water at 650 rpm for 30 minutes.

(3) 25%, w/w, NFMS solution with 0.5, 2.0 and 2.5% KELTROL-F added, respectively: Pre-mix 62.5 g NFMS with an appropriate amount KELTROL-F (i.e. 1.25, 2.50 and 3.75 g) and then mix the powder into 187.5 g water at 1000 rpm for 30 minutes (except for the mixture with 1.5% KTL-F added, for which 1200 rpm was used to have the effective stirring.)

(4) Heat treatment: While stirring at 650 rpm (for the gum nd NFMS solutions) or 1000 and 1200 rpm for the NFMS/KTL-F suspension, the hot-cup was turned on for 5 minutes. During this period, the temperature of the suspension reached 80-90 C.

EVALUATION:

The viscosity was measured on a RVTD Brookfield digital viscometer at 5 and 50 rpm.

RESULTS:

The NFMS/gum mixtures appeared to be a cream-like gel or semi-gel with a very smooth mouth-feel and texture. Microscopic analysis showed that in all of the suspensions, small particles (1-2 microns) were suspended in a dense and viscous phase.

Results of Procedure A are summarized in Table 1. Although DD-100 per se had the greatest viscosity (142,400 cP), its interaction with NFMS resulted in a dramatic reduction in viscosity of the mixture CB/A = 0.47 and 0.59 at 5 and 50 rpm). On the other hand, although KTL-F showed the lowest viscosity among the four gum solutions, its interaction with NFMS caused a significant increase in viscosity of the mixture (B/A = 3.98 and 3.01 at 5 and 50 rpm). These results have confirmed the strong reactivity of xanthan gum with proteins. In the former case (DD-100), it is possible that the so-called galactomannan synergistic interaction between xanthan gum and locust bean gum and guar gum is interfered with by the NFMS. In the latter case, it is possible that xanthan gum interacts with NFMS to form a soluble complex, hence synergistically increasing the viscosity. It should be noted that the interaction is very much concentration dependent (see below).

Heat treatment apparently enhances the interaction between xanthan gum and NFMS (52,800 vs 39,800 at 5 rpm and 6,480 vs 5180 at 50 rpm after and before heating). Although the mechanism involved is not fully understood, it can be postulated that the interaction is enhanced by unfolding of proteins and stretching of xanthan gum, thereby exposing more reactive sites to each other and maximizing the interaction.

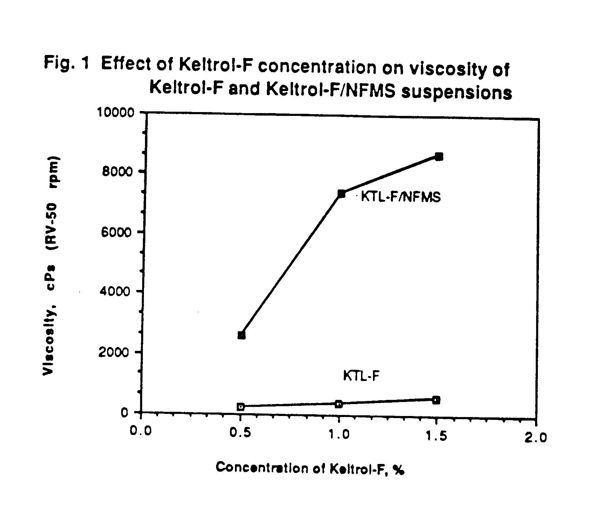

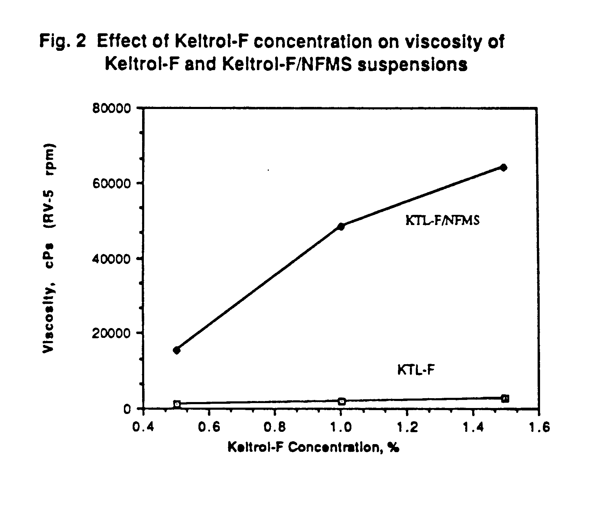

The results of Procedure B are summarized in Table 2. Xanthan gum concentration noticeably affected the interaction. By increasing KTL-F concentration from 0.5 to 1.0%, the B/A values increased from 14.3 to 23.1 (at 5 rpm) and from 10.0 to 17.7 (50 rpm). However, further increasing the gum effect of the gum concentration on the viscosity development are clearly demonstrated by Figs. 1 and 2. This indicates that the desired interaction can be maximized by optimizing the ratio between the proteins and gum.

Perhaps the most important observation to the above experiment is the fact that although both xanthan gum and milk protein molecules carry the same net negative charge because the pH of the gum/protein dispersions was around 6.5, they complex and give a synergistic viscosity increase. This observation is further confirmed by a more sophisticated electrokinetics analysis, which is demonstrated in Example 2.

9

## TABLE 1  VISCOSITY OF GUM, PROTEIN AND GUM/PROTEIN SUSPENSIONS WITH AND WITHOUT HEAT TREATMENT[1]

### VISCOSITY, cPs (5 RPM)

| SAMPLE | GUM | NFMS | CAL. VIS. (A) | OBS. VIS. (B) | NET CHANGE (B–A) | B/A |
|---|---|---|---|---|---|---|
| DD–100 | 142,400 | 8 | 142,408 | 66,600 | –75,808 | 0.47 |
| DD–300 | 43,600 | 8 | 43,608 | 66,200 | +22,592 | 1.52 |
| DD–400 | 98,600 | 8 | 98,608 | 97,000 | – 1,608 | 0.98 |
| KTL–F | 10,000 | 8 | 10,008 | 39,800 | +29,792 | 3.98 |
| HEATED[2] | | | | | | |
| DD–100 | 165,600 | 8 | 165,608 | 122,400 | –43,208 | 0.74 |
| KTL–F | 6,800 | 8 | 6,808 | 52,800 | +45,992 | 7.76 |

### VISCOSITY, cPs (50 RPM)

| SAMPLE | GUM | NFMS | CAL. VIS. (A) | OBS. VIS. (B) | NET CHANGE (B–A) | B/A |
|---|---|---|---|---|---|---|
| DD–100 | 17,100 | 16 | 17,116 | 10,160 | –6,956 | 0.59 |
| DD–300 | 7,000 | 16 | 7,016 | 9,840 | +2,824 | 1.40 |
| DD–400 | 12,300 | 16 | 12,316 | 14,860 | +2,544 | 1.21 |
| KTL–F | 1,700 | 16 | 1,716 | 5,180 | +3,464 | 3.02 |
| HEATED[2] | | | | | | |
| DD–100 | 46,400 | 16 | 46,416 | 22,400 | –24,016 | 0.48 |
| KTL–F | 1,300 | 16 | 1,316 | 6,480 | + 5,164 | 4.92t |

[1] The suspensions consisted of 2% gum, w/v, 20% NFMS, w/v and 2% gum with 20% NFMS, w/v, respectively.  Unless otherwise indicated, no heat treatment was applied during preparation.  The viscosities were measured on a RV after storing the samples at room temperature overnight to eliminate the possible interference of temperature difference generated during preparation.

[2] The samples were heated at about 80–100 C for 10 min and then stored in a refrigerator for 48 hr. Before the viscosity measurement, the samples were allowed to stand at room temperature for 6 hr to reach 18 C.

### TABLE 2    EFFECT OF KELTROL-F CONCENTRATION ON SYNERGSTIC VISCOSITY INCREASE OF KTL-F/NFMS MIXTURE[1]

**VISCOSITY, cPs (5 RPM)**

| KTL-F,% | GUM | NFMS | CAL. VIS. (A) | OBS. VIS. (B) | NET CHANGE (B-A) | B/A |
|---------|-----|------|---------------|---------------|------------------|-----|
| 0.5 | 1,080 | 10 | 1,090 | 15,600 | 14,510 | 14.3 |
| 1.0 | 2,080 | 10 | 2,090 | 48,200 | 46,110 | 23.1 |
| 1.5 | 2,680 | 10 | 2,690 | 64,200 | 61,510 | 23.9 |

**VISCOSITY, cPs (50 RPM)**

| KTL-F,% | GUM | NFMS | CAL. VIS. (A) | OBS. VIS. (B) | NET CHANGE (B-A) | B/A |
|---------|-----|------|---------------|---------------|------------------|-----|
| 0.5 | 240 | 22 | 262 | 2,620 | 2,358 | 10.0 |
| 1.0 | 396 | 22 | 418 | 7,380 | 6,962 | 17.7 |
| 1.5 | 576 | 22 | 598 | 8,700 | 8,102 | 14.5 |

1. The suspensions consisted of  25% NFMS, w/w,  various amounts of KTL-F to give 0.5, 1.0 and 1.5% gum concentration and  25% NFMS, w/w, with 0.5, 1.0 and 1.5% gum added, respectively.  The samples were heated in a hot-cup while stirring for 5 min and then stored in a refrigerator for 48 hr. The samples were allowed to stand at room temperature for 6 hr to reach 18 C before the viscosities were measured on a RVTD Brookfield Digital Viscometer.

EXAMPLE 2:

ELECTROKINETICS ANALYSES OF PROTEIN/GUM COMPLEXES

Electrokinetic techniques have been used to monitor the course of hydrocolloid interactions, such as gum/protein complexing. Hydrocolloids, when exposed to a voltage gradient in an electrophoresis chamber, migrate towards the electrode of opposite charge. The electrophoretic mobility of a hydrocolloid is defined as the electrophoretic velocity (m/sec) divided by the voltage gradient (V/m). Such electrophoretic measurements provide not only a basis from which zeta potentials and surface charge densities may be calculated, but also information on whether complexing of various hydrocolloids takes place.

It has been generally agreed upon that proteins complex with ionic polysaccharides under acidic conditions mainly through electrostatic association. The present study was designed to demonstrate that in addition to this primary complexing mechanism, protein and gum particles, though both carry net negative charge at netural pH, complex nevertheless through other interaction mechanisms.

MATERIALS:

Xanthan Gum: Keltrol TF Lot #56105A (Kelco, division of Merck & Co. Inc., CA 92123)
Gelian Gum: Kelcogel (Kelco, division of Merck & Co., Inc., CA 92123)
PGA: Kelcoloid LVF (Kelco, division of Merck & Co., Inc., CA 92123) Spray dried gum arabic (Gumix International, Inc., Hackensack,NJ)
Whey Protein, Bi-Pro (Le Sueur Isolates, Le Sueur, MN)
Soybean Isolate, PP660 (Protein Technology International St. Louis, MO)
Spray dried Egg White Solids (Henningsen Food Inc., Omaha, NE)
Soybean Lecithin (Centrolex F, Central Soya Company, Inc., Fort Wayne, IN)
Sodium stearoyl lactylates, ARTODAN SP55K (Grindsted Products, Inc., KS)

PROCEDURE:

(1) 0.1%, w/v, gum dispersion: Mix 0.4 g of gum in 400 ml DI water at 1000 rpm for 30 min. Heat the dispersion to 80 C and mix at this temperature for 30 minutes. Cool to room temperature overnight. Adjust with 0.5 N HCl to pHs 2, 4, 6.

(2) 2%, w/v, protein dispersions: Mix 8 g of protein in 400 ml DI water following the same procedure as in (1).

(3) 0.1%, w/v, gum + 2%, w/v, protein dispersion: Mix 0.4 g of gum and 8 g of protein in 400 ml DI water following the same procedure as (1).

(4) Before the analysis, dilute the gum, protein and gum/protein dispersion in half with DI water to give concentrations of 0.05%, 0.1% w/v, and 0.05% + 1%, respectively. Adjust pH if necessary.

Measurement of electrophoretic mobility:

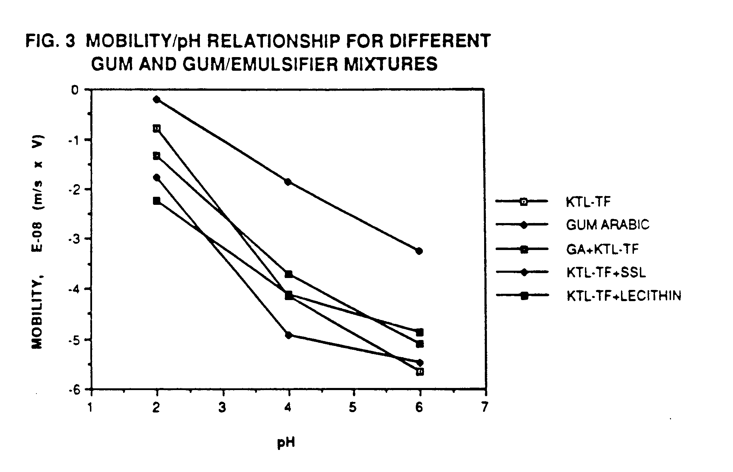

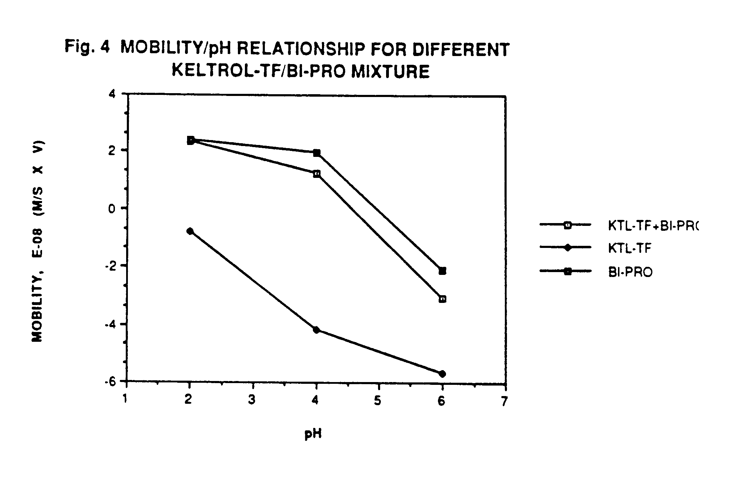

The mobility was measured on a PK-3000 Electrokinetics Analyzer (Penkem Inc., NY). At pH 2, addition Of surfactant (i.e. SSL and lecithin) or protein-containing gum arabic to KTL-TF seems to increase the negative charge density of the resultant complexes (Fig. 3). At pHs above their pka and pI values, a single mobility peak is observed in a whey protein/Keltrol TF mixture (Fig. 4 and Table 3). This indicates that although both carry the net negative charge, they form a complex regardless of the negative repulsion. This may suggest that in addition to electrostatic association between proteins and ionic polysaccharides as the primary complexing mechanism, there are probably other mechanism involved in the interaction, such as emulsifier and/or water mediated hydrophobic/hydrophilic associations, localized ionic interactions and other unknown interactions. The resultant complex may provide the fat mimicking properties in bakery products.

TABLE 3

| ELECTROPHORETIC MOBILITIES OF GUM/PROTEIN MIXTURES | | |
|---|---|---|
| SAMPLES | pH | MOBILITY, 10-8 (m2/s x V) |
| KTL-TF + BI-PRO | 7.2 | -3.66 |
| KELCOGEL + BI-PRO | 7.2 | -3.14 |
| KELCOLOID LVF + BI-PRO | 7.2 | -3.40 |
| KTL-TF + GUM ARABIC + BI-PRO | 7.2 | -3.66 |
| KTL-TF + SSL + BI-PRO | 6.9 | -3.79 |
| KTL-TF + LECITHIN + BI-PRO | 7.4 | -3.49 |
| KTL-TF + EGG WHITE | 7.5 | -4.47 |
| KTL-TF + PP-660 | 7.2 | -3.25 |
| KTL-TF + ALANATE-150 | 7.2 | -3.04 |

**EXAMPLE 3 PARTIAL SHORTENING REPLACEMENT OF YELLOW LAYER CAKE BY ADDITION OF XANTHAN GUM AND XANTHAN GUM BLEND**

## TABLE 4

### COMPOSITION OF THE SHORTENING-REDUCED YELLOW
### LAYER CAKE FORMULAS

**FORMULAS (%)**

| INGREDIENTS | 1 | 2 | 3 | 4 | 5 |
|---|---|---|---|---|---|
| WATER | 31.99 | 33.28 | 32.75 | 33.19 | 33.20 |
| SUGAR | 30.86 | 32.10 | 31.60 | 32.02 | 32.02 |
| CAKE FLOUR | 25.80 | 26.84 | 26.41 | 26.77 | 26.77 |
| SHORTENING | 5.16 | 1.34 | 2.64 | 1.34 | 1.34 |
| WHOLE EGG SOLIDS | 1.55 | 1.61 | 1.59 | 1.61 | 1.61 |
| NFMS | 1.55 | 1.61 | 1.59 | 1.61 | 1.61 |
| BAKING POWDER | 1.55 | 1.61 | 1.59 | 1.61 | 1.61 |
| EMULSIFIER | 0.81 | 0.81 | 0.79 | 0.81 | 0.81 |
| SALT | 0.81 | 0.81 | 0.79 | 0.81 | 0.81 |
| EGG SHADE | 0.005 | 0.005 | 0.005 | 0.005 | 0.005 |
| KELTROL TF | – | – | 0.26 | – | – |
| KELTROL F | – | – | – | 0.26 | – |
| GFS | – | – | – | – | 0.26 |

Formulas:

1: Positive control: 100% shortening.

2: Negative control: 75% of the shortening removed.

3: 50% of the shortening replaced by the addition of 0.26% Keltrol TF.

4: 75% of the shortening replaced by the addition of 0.26% Keltrol F.

5: 75% of the shortening replaced by the addition of 0.26% GFS (blend of keltrol F, guar gum and locust bean gum, manufactured by Kelco, division ofMerck & Co. Inc., CA 92123).

PROCEDURE:

1. Weigh all dry ingredients and blend.
2. Screen through a 10 mesh (1.68 micron) screen.
3. Add dry ingredients to a Hobart bowl and add shortening and emulsifier.
4. Mix at low speed for three minutes.
5. Add 300 grams water. Mix at low speed for 1 minute, followed by three minutes at medium speed.
6. Add 150 grams water. Mix at low speed for one minute, followed by one minute at medium speed.
7. Add 170 grams water. Mix at low speed for two minutes.

8. Pour 400 grams into greased and floured 8-inch (20 cm) cake pan. Bake at 375°F (191°C) for 28 minutes.

9. Cool on wire rack for 15 minutes before depanning. Evaluate the depannability by estimating the integrability of the crust on the side of the cake.

EVALUATION

Batter1. Measure the batter viscosity using a Brookfield RVT, spindle #5, at 5 and 50 rpm, and record its pH (300 ml tall form beaker).

2. Measure the density of the batter (g/cc), using a vessel 50-100 cc capacity which can be leveled off with a spatula. Fill the tared vessel completely with water and weigh (1cc/1g). Results are reported as grams of batter/cc of water.

Cake
After depanning, place the cake on racks and cool at room temperature for 45 minutes and then weigh the cake.

2. Wrap the cake with a piece of thin film and measure the volume of the cake using a cake volume meter (National Mfg., Co.) (average results 3 cakes/Batch). Calculate the specific volume (cc/g). by dividing the cake volume by weight. Density (g/cc) is taken as the reciprocal value of the specific volume.

3. Cut the cake in half and cut a one inch square plug out of the center of one of the pieces top to bottom. Crumble the cake plug in a pre-weighed plastic weighing dish and weigh the cake crumb. Place the dish with the contents in a warm, well-ventilated place overnight so that the cake crumb will reach air-dry condition. Weigh the dish andcontents and calculate the % moisture lost in air-drying (A). Grind air-dried sample and weigh 2.00 gram into a preweighed aluminum moisture dish. Heat the dish with contents in an oven preheated at 130 C for 1 hour. After heating, place the dish in a desiccator and cool for 15 minutes. Reweigh the dish with contents and calculate the % moisture lost in oven-drying (B). The total moisture is the sum of A and B (average results of 3 cakes/batch).

4. Following American Association of Cereal Chemists (AACC) method 10-91, measure the Volume Index, Symmetry Index and Uniformity Index of the Cake.

5. Evaluate the texture of the cake subjectively by pressing with fingertip. Evaluate for springiness and firmness.

6. Observe the texture and degree of uniformity, e.g. cell structure and tunneling.

7. Gently rub the cut cake surface and evaluate for tendency to crumb.

8. Taste the cake and evaluate subjectively for moistness and mouthfeel.

SCORE
5 = excellent uniformity, subjective texture, tolerance to crumb or moistness. Above 75% of the crust on the side of the cake remains intact.4 = good uniformity, subjective texture, tolerance to crumb or moistness. 75% of the crust on the side of the cake remains intact.

3 = moderately good uniformity, subjective texture, tolerance to crumb or moistness. 50% of the crust on the side of the cake remains intact.

2 = fair uniformity, subjective texture, tolerance to crumb or moistness. 25% of the crust on the side of the cake remains intact.

1 = poor uniformity, subjective texture, tolerance to crumb or moistness. Less than 15% of the crust on the side of the cake remains intact.

As shown in Table 5 the formulas containing 50 or 75% shortening replaced by either KELTROL F, TF or GFS show a greater Baking Volume Index, a lower cake density, a greater depannability, finer cell texture, and a greater resistance to crumbling than those of positive or negative controls. However, the positive control cakes show better symmetry and the cakes containing no gum have fewer tunnels. Results of sensory evaluation by an untrained taste panel have indicated that the cakes containing 75% of the shortening replaced by Keltrol TF or GFS have better sensory properties than both positive or negative control cakes. Namely, they taste more moist, are easy to clean in the mouth and more chewable, whereas the controls are gummy and sticky and more difficult to clean in the mouth.

## TABLE 5. BAKING QUALITY OF THE TESTED FORMULAS[1]

| | | FORMULAS | | | |
|---|---|---|---|---|---|
| | **1** | **2** | **3** | **4** | **5** |
| **BAKING QUALITY** | | | | | |
| Batter viscosity (cP) | | | | | |
| 5 rpm | 44,400 | 19,800 | 44,200 | 51,800 | 33,200 |
| 50 rpm | 11,500 | 6,660 | 11,760 | 14,520 | 9,680 |
| Batter density (g/cc) | 0.51 | 0.66 | 0.93 | 0.69 | 0.65 |
| Batter pH | 7.06 | 6.83 | 6.64 | 6.82 | 7.00 |
| Cake density (g/cc) | 0.29 | 0.30 | -- | 0.26 | 0.27 |
| Cake moisture (%) | 36.61 | 34.10 | -- | 35.10 | 35.11 |
| Volume Index | 131.3 | 127.3 | -- | 139.7 | 139.0 |
| Symmetry Index | 7.7 | 11.7 | -- | 17.3 | 12.0 |
| Depanability | 1.7 | 3.0 | -- | 4.0 | 4.0 |
| Tolerance to crumb | 1 | 1 | 5 | 5 | 5 |
| Tunneling | 4 | 4 | 2 | 2 | 3 |
| Cell structure | 3 | 2 | 4 | 4 | 4 |
| Sensory rating | 3 | 2 | 4 | 5 | 5 |

1) Formulas:

1: Positive control: 100% shortening.

2: Negative control: 75% of the shortening removed.

3: 50% of the shortening replaced by the addition of 0.26% Keltrol TF

4: 75% of the shortening replaced by the addition of 0.26% Keltrol F.

5: 75% of the shortening replaced by the addition of 0.26% GFS.

## EXAMPLE 4. PARTIAL SHORTENING REPLACEMENT LAYER CAKE BY ADDITION OF DIFFERENT GUMS

1) Formulas:

1: Positive control: 100% shortening.

2: Negative control: 75% of the shortening removed.

3: 75% of the shortening replaced by the addition of 0.21% KELTROL F.

4: 75% of the shortening replaced by the addition of 0.21% gum arabic (Gumix International Inc.).

5: 75% of the shortening replaced by the addition of 0.21% CMC (7HF, Aqualon).

6: 75% of the shortening replaced by the addition of 0.21% guar gum (SUPERCOL Fine guar).

7: 75% of the shortening replaced by the addition of 0.21% gellan gum (Kelcogel).

2) Preparation and Evaluation:

The cakes were prepared and evaluated according to the procedure described in Example 3. The cakes were evaluated by an untrained taste panel consisting of 7 members. Only 2.5 members preferred the full fat cake to the fat reduced cake with different gums.

## TABLE 6. COMPOSITION OF SHORTENING-REDUCED YELLOW LAYER CAKE FORMULAS

### FORMULAS (%)

| INGREDIENTS | 1 | 2 | 3 | 4 | 5 | 6 | 7 |
|---|---|---|---|---|---|---|---|
| WATER | 31.99 | 33.28 | 33.20 | 33.20 | 33.20 | 33.20 | 33.20 |
| SUGAR | 30.86 | 32.10 | 32.03 | 32.03 | 32.03 | 32.03 | 32.03 |
| CAKE FLOUR | 25.80 | 26.84 | 26.78 | 26.78 | 26.78 | 26.78 | 26.78 |
| SHORTENING | 5.16 | 1.34 | 1.34 | 1.34 | 1.34 | 1.34 | 1.34 |
| EGG SOLIDS | 1.55 | 1.61 | 1.61 | 1.61 | 1.61 | 1.61 | 1.61 |
| NFMS | 1.55 | 1.61 | 1.61 | 1.61 | 1.61 | 1.61 | 1.61 |
| BAKING POWDER | 1.55 | 1.61 | 1.61 | 1.61 | 1.61 | 1.61 | 1.61 |
| EMULSIFIER | 0.81 | 0.81 | 0.80 | 0.80 | 0.80 | 0.80 | 0.80 |
| SALT | 0.81 | 0.81 | 0.80 | 0.80 | 0.80 | 0.80 | 0.80 |
| EGG SHADE | 0.005 | 0.005 | 0.005 | 0.005 | 0.005 | 0.005 | 0.005 |
| KELTROL F | – | – | 0.21 | – | – | – | – |
| GUM ARABIC | – | – | – | 0.21 | – | – | – |
| CMC | – | – | – | – | 0.21 | – | – |
| GUAR | – | – | – | – | – | 0.21 | – |
| KELCOGEL | – | – | – | – | – | – | 0.21 |

### TABLE 7. BAKING QUALITY OF THE TESTED FORMULAS

**FORMULAS**

| BAKING QUALITY | 1 | 2 | 3 | 4 | 5 | 6 | 7 |
|---|---|---|---|---|---|---|---|
| Batter viscosity (cP) | | | | | | | |
| 5 rpm | 33,800 | 6,400 | 36,600 | 5,000 | 21,600 | 20,000 | 17,800 |
| 50 rpm | 8,400 | 2,620 | 9,620 | 3,080 | 7,660 | 7,400 | 4,940 |
| Batter density (g/cc) | 0.74 | 0.94 | 0.90 | 0.89 | 0.84 | 0.86 | 0.78 |
| Batter pH | 6.49 | 6.48 | 6.52 | 6.51 | 6.56 | 6.57 | 6.54 |
| Cake density (g/cc) | 0.34 | 0.34 | 0.32 | 0.34 | 0.34 | 0.34 | 0.32 |
| Cake moisture (%) | 33.1 | 34.1 | 35.4 | 34.4 | 34.1 | 34.7 | 35.3 |
| Volume Index | 119 | 121 | 138 | 122 | 119 | 118 | 127 |
| Symmetry Index | 8.5 | 5.5 | 24 | 4 | 8 | 7 | 9 |
| Tunneling | 5 | 2 | 2 | 3 | 3 | 3 | 4 |

## EXAMPLE 5. COMPLETE SHORTENING REPLACEMENT OF YELLOW LAYER CAKE BY SHORTENING REPLACERS

PREPARATION OF SHORTENING REPLACERS

### TABLE 8. FORMULATION OF SHORTENING REPLACERS

| EX Number | Xanthan Gum (Keltrol TF) | Guar Gum (Supercol U) | Gum Arabic (Spray Dried) | SSL (Emplex) | Monoglyceride (Myvatex) |
|---|---|---|---|---|---|
| 6000 | 27.7 | 27.7 | ---- | 44.6 | ---- |
| 6001 | 22.6 | 22.6 | ---- | 36.5 | 18.3 |
| 6002 | 31.1 | ----- | 31.1 | 37.8 | ---- |
| 6003 | 18.8 | 18.8 | ---- | 62.4 | ---- |
| 6004 | 23.7 | ----- | 23.7 | 52.6 | ---- |

Sift each component through a 200 U.S. mesh sieve and blend the dry ingredients in a V blendor for 1 hour.

PREPARATION OF SHORTENING-FREE AND CHOLESTEROL-FREE YELLOW LAYER CAKES

17

### TABLE 9. COMPOSITION OF THE SHORTENING-FREE AND CHOLESTEROL-FREE YELLOW LAYER CAKE FORMULA

FORMULAS (%)

| | 1 Full-fat | 2 EX 600 | 3 EX 6001 | 4 EX 6002 |
|---|---|---|---|---|
| Cake shortening | 10.0 | 0.0 | 0.0 | 0.0 |
| Water | 31.60 | 36.33 | 36.31 | 36.31 |
| Granular sugar | 28.22 | 30.27 | 30.26 | 30.26 |
| Enriched, bleached cake flour | 22.60 | 24.22 | 24.20 | 24.20 |
| Dried whole egg solids (W-1-FF) | 2.82 | 0.0 | 0.0 | 0.0 |
| Dried egg white (P-20) | 0.0 | 2.42 | 2.42 | 2.42 |
| NFMS | 2.26 | 2.42 | 2.42 | 2.42 |
| Double acting baking powder (Calumet) | 1.41 | 1.82 | 1.82 | 1.82 |
| Fine granular salt | 0.68 | 0.73 | 0.73 | 0.73 |
| Cake emulsifier (Kakemate) | 0.11 | 1.51 | 1.51 | 1.51 |
| Baker's Egg Shade 8038 | 0.005 | 0.005 | 0.005 | 0.005 |
| EX 6000 | 0.0 | 0.27 | 0.0 | 0.0 |
| EX 6001 | 0.0 | 0.0 | 0.33 | 0.0 |
| EX 6002 | 0.0 | 0.0 | 0.0 | 0.32 |

The cakes were prepared according to the procedure described in Example 3. The baking qualities of the shortening-free and cholesterol-free cakes were compared with the full-fat cakes and the results are summarized in Table 10. The organoleptic properties of the cakes were evaluated by an untrained taste panel consisting of 20 members and the sensory scores are summarized in Table 11. The highest score (like very much) is 7 and the lowest (dislike very much) is 1.

18

## TABLE 10. BAKING QUALITY OF SHORTENING-FREE AND CHOLESTEROL-FREE YELLOW LAYER CAKES

CAKE SCORE

| SAMPLE | FULL-FAT | CONTROL | EX 6000 | EX 6001 | EX 6002 |
|---|---|---|---|---|---|
| Quality, maximum score | | | | | |
| External: | 30 | | | | |
| Volume | 10 | 8.00 | 9.50 | 9.25 | 9.75 |
| Symmetry | 5 | 4.50 | 4.50 | 4.50 | 4.50 |
| Crust Character | 10 | 8.00 | 7.25 | 7.50 | 7.25 |
| Crust Color | 5 | 4.50 | 4.00 | 4.00 | 4.00 |
| Internal | 70 | | | | |
| Grain | 10 | 7.75 | 8.00 | 8.00 | 8.25 |
| Texture | 15 | 12.50 | 12.75 | 12.75 | 13.00 |
| Crumb color | 10 | 9.00 | 9.00 | 9.00 | 9.00 |
| Aroma | 10 | 9.00 | 9.00 | 9.00 | 9.00 |
| Taste | 15 | 13.00 | 13.00 | 13.00 | 13.00 |
| Mouthfeel | 10 | 9.00 | 8.75 | 8.75 | 9.25 |
| **Total Score** | | **85.25** | **85.75** | **85.75** | **87.00** |
| Batter Density $(g/cm^3)$ | | 0.905 | 0.665 | 0.665 | 0.650 |
| **Cake Density** $(g/cm^3)$ | | **0.29** | **0.27** | **0.27** | **0.27** |

19

EP 0 468 552 A2

### TABLE 11. RESULTS OF SENSORY EVALUATION OF SHORTENING-FREE AND CHOLESTEROL-FREE YELLOW LAYER CAKES

| PANELIST NO. | SAMPLE SCORES | | | |
|---|---|---|---|---|
| | Full-fat | EX 6000 | EX 6001 | EX 6002 |
| 1 | 7 | 5 | 5 | 5 |
| 2 | 7 | 5 | 6 | 5 |
| 3 | 4 | 2 | 2 | 2 |
| 4 | 6 | 1 | 1 | 2 |
| 5 | 6 | 3 | 3 | 3 |
| 6 | 5 | 2 | 3 | 2 |
| 7 | 4 | 2 | 1 | 3 |
| 8 | 3 | 1 | 1 | 6 |
| 9 | 7 | 5 | 7 | 6 |
| 10 | 5 | 5 | 3 | 2 |
| 11 | 6 | 3 | 6 | 5 |
| 12 | 7 | 7 | 7 | 6 |
| 13 | 7 | 5 | 3 | 4 |
| 14 | 6 | 3 | 5 | 3 |
| 15 | 6 | 3 | 2 | 1 |
| 16 | 6 | 5 | 5 | 6 |
| 17 | 6 | 3 | 2 | 5 |
| 18 | 7 | 6 | 6 | 6 |
| 19 | 5 | 1 | 1 | 1 |
| 20 | 6 | 6 | 3 | 3 |
| | | | | |
| Mean Value | 5.80 | 3.65 | 3.60 | 3.80 |
| Standard Deviation | 1.15 | 1.84 | 2.09 | 1.79 |

The highest score is 7 (like very much) and the lowest score is 1 (dislike

very much).

Theses results indicate that at least in farinaceous foods, fat mimicking property may be attributed to the protein and polysaccharide interactions. The shortening-free and cholesterol-free yellow layer cakes had either similar or even better baking qualities than the full fat cakes and comparable organoleptic properties to the full fat cakes. In addition, in comparison with other fat substitute, either already ilable or yet to be approved by FDA, the present invention is much simpler and more cost-effective. It does not require any sophisticated process operation. All of the ingredients to be used in the blends are either GRAS, such as xanthan gum and monoglyceride, or commonly used in the baking industry, such as SSL and polysobate

20

60. Since no special chemical or physical treatments are applied on blends, there is no need to apply for a GRAS status.

**EXAMPLE 6. COMPLETE SHORTENING REPLACEMENT OF BLUEBERRY MUFFINS BY SHORTENING REPLACERS**

### TABLE 12.  COMPOSITION OF THE SHORTENING-FREE AND CHOLESTEROL-FREE BLUEBERRY MUFFIN FORMULA

| | FORMULAS (%) | | |
|---|---|---|---|
| | 1 | 2 | 3 |
| | Full-fat | EX 6003 | EX 6004 |
| Cake shortening | 8.98 | 0.0 | 0.0 |
| Water | 28.10 | 30.51 | 30.49 |
| Granular sugar | 24.57 | 26.68 | 26.66 |
| Enriched, bleached cake flour | 18.43 | 20.00 | 20.00 |
| Bread flour | 14.21 | 15.42 | 15.41 |
| Dried whole egg solids (W-1-FF) | 1.84 | 0.0 | 0.0 |
| Dried egg white (P-20) | 0.0 | 1.00 | 1.00 |
| NFMS | 2.15 | 2.33 | 2.33 |
| Baking soda | 0.46 | 0.62 | 0.62 |
| Sodium acid pyrophosphate, #26 | 0.64 | 0.84 | 0.83 |
| Fine granular salt | 0.61 | 0.67 | 0.67 |
| Cake emulsifier (Kakemate) | 0.0 | 1.67 | 1.67 |
| Baker's Egg Shade 8038 | 0.005 | 0.005 | 0.005 |
| EX 6003 | 0.0 | 0.27 | 0.0 |
| EX 6004 | 0.0 | 0.0 | 0.32 |
| | % (based on total formula) | | |
| Frozen blueberries (IQF) | 16.3 | 17.4 | 17.4 |
| Bread flour | 0.64 | 0.68 | 0.68 |

1) PREPARATION

Blend the dry ingredients with cake emulsifier and/or cake shortening on a Hobart N-50 mixer with paddle agitator at low speed for 3 min. Add cold water and mix for 1 min at low speed and for 3 min at medium speed. Dust frozen fruit with bread flour and incorporate immediately into batter. Scale 80 grams of batter per muffin and bake at 400 F for 24 min.

2) EVALUATION

The shortening-free blueberry muffins had nearly identical texture, apperance, baking volume and organoleptic properties as the full-fat blueberry muffins.

**EXAMPLE 7, COMPLETE SHORTENING REPLACEMENT OF DEVIL'S FOOD CAKES BY SHORTENING REPLACERS**

## TABLE 13. COMPOSITION OF THE SHORTENING-FREE AND CHOLESTEROL-FREE DEVIL'S FOOD CAKE FORMULA

FORMULAS (%)

| | 1 Full-fat | 2 EX 6003 | 3 EX 6004 |
|---|---|---|---|
| Cake shortening | 8.54 | 0.0 | 0.0 |
| Water | 38.40 | 42.78 | 42.73 |
| Granular sugar | 23.92 | 26.62 | 26.59 |
| Enriched, bleached cake flour | 17.08 | 19.01 | 18.99 |
| Dried whole egg solids (W-1-FF) | 5.12 | 0.0 | 0.0 |
| Dried egg white (P-20) | 0.0 | 2.85 | 2.85 |
| Cocoa Powder (Dutch) | 3.42 | 3.80 | 3.80 |
| Double acting baking powder (Calumet) | 1.28 | 1.66 | 1.66 |
| Fine granular salt | 0.51 | 0.57 | 0.57 |
| Pregelatinized cornstarch (Amaizo 721-A) | 0.85 | 0.95 | 0.95 |
| Cake emulsifier (Kakemate) | 0.68 | 1.43 | 1.42 |
| N & A chocolate flavor | 0.15 | 0.15 | 0.15 |
| EX 6003 | 0.0 | 0.176 | 0.00 |
| EX 6004 | 0.0 | 0.00 | 0.18 |

The cakes were prepared and evaluated according to the procedure described in Example 3. The shortening-freedevil's food cakes had a similar texture, appearance, baking volume and organoleptic properties as the full fat cakes except that the former had slightly lighter color and finer microcell structure than the latter.

## Claims

1. A dry blend fat substitute comprising one or more xanthan gums and at least one ingredient selected from each of the groups of ingredient categories consisting of:
   (a) one or more other gums, selected from gum arabic, propylene glycol alginate, guar gum, locust bean gum, gellan gum, alginates, carrageenan, maltodextrin and carboxymethyl cellulose;
   (b) one or more emulsifiers selected from mono-diglycerides, sodium stearoyl lactylate, lecithin, sorbitan monostearate, poly(oxy-1,2ethanediyl) derivatives of sorbitan monooctadecanoate and diacetyl tartaric acid ester of monoglycerides.

2. A dry blend according to Claim 1 comprising xanthan gum, other gums, and emulsifiers wherein the weight ratio is 5 to 30 parts of xanthan gum, 5 to 25 parts of other gum, and 40 to 70 parts of emulsifier.

EP 0 468 552 A2

**3.** A dry blend according to Claim 2 wherein the emulsifier is sodium stearoyl lactylate.

**4.** A dry blend according to Claim 3 comprising:
(a) fine mesh clarified xanthan gum, gum arabic, maltodextrin, and sodium stearoyl lactate, in a weight ratio of 14 part of xanthan, 14 parts of gum arabic, 14 parts of maltodextrin and 58 parts of sodium stearoyl lactate; or (b) fine mesh clarified xanthan gum, gum arabic, guar gum, maltodextrin arabic, and sodium stearoyl lactate, in a weight ratio of 10 part of xanthan, 10 parts of gum arabic, 10 parts of guar gum, 14 parts of maltodextrin and 47 parts of sodium stearoyl lactate.

**5.** A dry blend according to Claim 3 wherein the other gums are selected from a group consisting of gum arabic, guar gum, and gellan gum.

**6.** A dry blend according to Claim 5 comprising:
(a) fine mesh clarified xanthan gum, guar gum and sodium stearoyl lactate, in a weight ratio of 14 part of xanthan, 14 parts of guar gum and 72 parts of sodium stearoyl lactate; or
(b) fine mesh clarified xanthan gum, guar gum and sodium stearoyl lactate, in a weight ratio of 8 part of xanthan, 20 parts of guar gum and 72 parts of sodium stearoyl lactate; or
(c) fine mesh clarified xanthan gum, gum arabic and sodium stearoyl lactate, in a weight ratio of 17 part of xanthan, 17 parts of guar gum and 66 parts of sodium stearoyl lactate; or
(d) fine mesh clarified xanthan gum, gum arabic and sodium stearoyl lactate, in a weight ratio of 25 part of xanthan, 8 parts of gum arabic and 67 parts of sodium stearoyl lactate; or
(e) fine mesh clarified xanthan gum, guar gum, gellan gum and sodium stearoyl lactate, in a weight ratio of 12.5 part of xanthan, 12.5 parts of guar gum, 8 parts of gellan gum and 67 parts of sodium stearoyl lactate; or (f) fine mesh clarified xanthan gum, gum arabic, gellan gum and sodium stearoyl lactate, in a weight ratio of 15 part of xanthan, 15 parts of gum arabic, 8 parts of gellan gum and 62 parts of sodium stearoyl lactate; or
(g) fine mesh clarified xanthan gum, guar gum, gum arabic, and sodium stearoyl lactate, in a weight ratio of 11 part of xanthan, 11 parts of guar gum, 11 parts of gum arabic and 67 parts of sodium stearoyl lactate.

**7.** A dry blend according to Claim 1 consisting essentially of xanthan gum, other gums, and emulsifiers where the weight ratio is 5 to 30 parts of xanthan gum, 5 to 25 parts of other gum, and 40 to 70 parts of emulsifier.

**8.** A dry blend according to Claim 7 consisting essentially of:
(a) fine mesh clarified xanthan gum, guar gum and sodium stearoyl lactate, in a weight ratio of 14 part of xanthan, 14 parts of guar gum and 72 parts of sodium stearoyl lactate; or
(b) fine mesh clarified xanthan gum, guar gum and sodium stearoyl lactate, in a weight ratio of 8 part of xanthan, 20 parts of guar gum and 72 parts of sodium stearoyl lactate; or
(c) fine mesh clarified xanthan gum, gum arabic and sodium stearoyl lactate, in a weight ratio of 17 part of xanthan, 17 parts of guar gum and 66 parts of sodium stearoyl lactate; or
(d) fine mesh clarified xanthan gum, gum arabic and sodium stearoyl lactate, in a weight ratio of 25 part of xanthan, 8 parts of gum arabic and 67 parts of sodium stearoyl lactate; or
(e) fine mesh clarified xanthan gum, guar gum, gellan gum and sodium stearoyl lactate, in a weight ratio of 12.5 part of xanthan, 12.5 parts of guar gum, 8 parts of gellan gum and 67 parts of sodium stearoyl lactate; or
(f) fine mesh clarified xanthan gum, gum arabic, gellan gum and sodium stearoyl lactate, in a weight ratio of 15 part of xanthan, 15 parts of gum arabic, 8 parts of gellan gum and 62 parts of sodium stearoyl lactate; or
(g) fine mesh clarified xanthan gum, guar gum, gum arabic, and sodium stearoyl lactate, in a weight ratio of 11 part of xanthan, 11 parts of guar gum, 11 parts of gum arabic and 67 parts of sodium stearoyl lactate; or
(h) fine mesh clarified xanthan gum, gum arabic, maltodextrin arabic, and sodium stearoyl lactate, in a weight ratio of 14 part of xanthan, 14 parts of gum arabic; 14 parts of maltodextrin and 58 parts of sodium stearoyl lactate; or
(i) fine mesh clarified xanthan gum, gum arabic, guar gum, maltodextrin arabic, and sodium stearoyl lactate, in a weight ratio of 10 part of xanthan, 10 parts of gum arabic, 10 parts of guar gum, 14 parts of maltodextrin and 47 parts of sodium stearoyl lactate.

23

9. A shortening sparing baking composition comprising on a formulation basis 0.01 to 0.80 weight percent of a dry blend fat substitute according to Claim 1.

10. A shortening sparing baking composition comprising on a formulation basis 0.02 to .60 weight percent of a dry blend fat substitute according to Claim 1.

11. A shortening sparing baking composition comprising on a formulation basis 0.01 to .80 weight percent of a dry blend fat substitute according to Claim 2.

12. A shortening sparing baking composition comprising on a formulation basis 0.02 to .60 weight percent of a dry blend fat substitute according to Claim 2.

13. A shortening sparing baking composition according to Claim comprising of a formulation basis:
(a) 15 to 25 parts by weight of flour;
(b) 20 to 45 parts by weight of sugar;
(c) 0 to 25 parts by weight of cake shortening;
(d) 1.5 to 15.0 parts by weight of protein selected from one or more sources, which are gluten, NFMS, whey proteins, egg proteins, soy proteins, caseinates, cotton seed proteins, gelatin and yeast;
(e) 1.0 to 3.0 parts by weight of emulsifiers, selected from one or more sources which are mono-diglycerides, sodium stearoyl lactylate, lecithin, sorbitan monostearate, poly(oxy-1,2ethanediyl) derivatives of sorbitan monooctadecanoate and diacetyl tartaric acid ester of monoglycerides;
(f) 0.025 to 0.5 parts by weight of one or more xanthan gums;
(g) 0 to 0.5 parts by weight one or more of the other gums selected from the group consisting of gum arabic, alginates, propylene glycol alginates, guar gum, gellan gum, CMC, carrageenan, and locust bean gum;
(h) 1.0 to 2.0 parts by weight of baking powder, selected from baking soda, monocalcium phosphate, sodium aluminum sulfate, calcium sulfate, calcium acid phosphate and sodium acid pyrophosphate;
(i) 0.5 to 1.5 parts by weight of sodium chloride;
(j) 15 to 50 parts by weight of water.

14. A shortening sparing baking composition according to Claim 13 comprising on a formulation basis:
(a) 25 parts by weight of flour;
(b) 20 to 35 parts by weight of sugar;
(c) 0 to 2.7 parts by weight of cake shortening;
(d) 3.0 to 10.0 parts by weight of protein from one or more sources, which are gluten, NFMS, whey proteins, egg proteins, soy proteins, caseinates, cotton seed proteins, gelatin and yeast;
(e) 1.0 to 2.0 parts by weight of emulsifiers, from one or more sources which are mono-diglycerides, sodium stearoyl lactylate, lecithin, sorbitan monostearate, a poly(oxy-1,2ethanediyl) derivatives of sorbitan monooctadecanoate and diacetyl tartaric acid ester of monoglycerides;
(f) 0.05 to 0.4 parts by weight of one or more xanthan gums;
(g) 0.05 to 0.4 parts by weight of one or more of the other gums selected from the group consisting of gum arabic, alginates, propylene glycol alginates, guar gum, gellan gum, CMC, carrageenan, and locust bean gum;
(h) 1.5 to 2.0 parts by weight of baking powder, such as baking soda, monocalcium phosphate, sodium aluminum sulfate, calcium sulfate, calcium acid phosphate and sodium acid pyrophosphate;
(i) 0.5 to 1.0 parts by weight of sodium chloride;
(j) 15 to 50 parts by weight of water.

15. A shortening sparing baking compositions comprising on a formulation basis:
(a) 15 to 25 parts by weight of flour;
(b) 10 to 20 parts by weight of bread flour;
(c) 15 to 45 parts by weight of sugar;
(d) 0 to 20 parts by weight of cake shortening;
(e) 1.5 to 15.0 parts by weight of protein from one or more sources, which are gluten, NFMS, whey proteins, egg proteins, soy proteins, caseinates, cotton seed proteins, gelatin, and yeast;
(f) 1.0 to 3.0 parts by weight of emulsifiers, selected from one or more sources which are mono-diglycerides, sodium stearoyl lactylate, lecithin, sorbitan monostearate, poly(oxy-1,2ethanediyl) derivatives of sorbitan monooctadecanoate and diacetyl tartaric acid ester of monoglycerides;

(g) 0.02 to 0.4 parts by weight of one or more xanthan gum;

(h) 0 to 0.4 parts by weight one or more of the other gums selected from the group consisting of gum arabic, alginates, propylene glycol alginates, guar gum, gellan gum, CMC, carrageenan, and locust bean gum;

(i) 1.0 to 2.0 parts by weight of baking powder, selected from baking soda, monocalcium phosphate, sodium aluminum sulfate, calcium sulfate, calcium acid phosphate and sodium acid pyrophosphate;

(j) 0.5 to 1.5 parts by weight of sodium chloride;

(k) 10 to 25 parts by weight of frozen fruit;

(l) 15 to 50 parts by weight of water.

16. A shortening sparing baking composition comprising on a formulation basis:

(a) 15 to 25 parts by weight of flour;

(b) 20 to 45 parts by weight of sugar;

(c) 0 to 25 parts by weight of cake shortening;

(d) 1.5 to 15.0 parts by weight of protein from one or more sources, which are gluten, NFMS, whey proteins, egg proteins, soy proteins, caseinates, cotton seed proteins, gelatin and yeast;

(e) 1.0 to 3.0 parts by weight of emulsifiers, selected from one or more sources which are mono-diglycerides, sodium stearoyl lactylate, lecithin, sorbitan monostearate, poly(oxy-1,2ethanediyl) derivatives of sorbitan monooctadecanoate and diacetyl tartaric acid ester of monoglycerides;

(f) 0.025 to 0.5 parts by weight of one or more xanthan gum;

(g) 0 to 0.5 parts by weight one or more of the other gums selected from the group consisting of gum arabic, alginates, propylene glycol alginates, guar gum, gellan gum, CMC, carrageenan, and locust bean gum;

(h) 1.0 to 2.0 parts by weight of baking powder, selected from baking soda, monocalcium phosphate, sodium aluminum sulfate, calcium sulfate, calcium acid phosphate and sodium acid pyrophosphate;

(i) 0.5 to 1.5 parts by weight of sodium chloride;

(j) 2.0 to 10.0 parts by weights of alkaline-treated cocoa powder;

(k) 15 to 50 parts by weight of water.

17. A process for producing a shortening sparing bakery product comprising:

(a) preparing a dry blend fat substitute according to Claim 1:

(b) preparing a batter formulation, said batter formulation consisting, on a formulation basis, of 15 to 50% water, 0 to 25% cake shortening, 15 to 45% flour, 15 to 45% sugar, 1.5 to 5.0% dry egg whites, 1.5 to 5.0% non-fat milk solids, 0.5 to 2.0% cake emulsifier, 0.5 to 3.0% leavening agents and 0.05 to 0.50% of the said dry blend fat substitute, 0.2 to 1.0% salt; and

(c) baking the said batter at the temperature within the range from 350 to 450 F for 10 to 40 minutes.

18. A process for producing a shortening sparing bakery product comprising:

(a) preparing a dry blend fat substitute according to Claim 2;

(b) preparing a batter formulation, said batter formulation consisting, on a formulation basis, of 15 to 50% water, 0 to 25% cake shortening, 15 to 45% cake or bread flour, 15 to 45% sugar, 1.5 to 5.0% dry egg whites, 1.5 to 5.0% non-fat milk solids, 0.5 to 2.0% cake emulsifier, 0.5 to 3.0% leavening agents and 0.05 to 0.50% of the said dry blend fat substitute, 0.2 to 1.0% salt; and

(c) baking the said batter at the temperature within the range from 350 to 450 F for 10 to 40 minutes.

19. The process according to Claim 17 wherein the bakery product is a yellow layer cake batter formulation comprising, on a formulation basis 25% of cake flour, 20 to 35% of sugar, 0 to 2.7% of cake shortening, 3.0 to 10.0% of protein from one or more sources, selected from gluten, NFMS, whey proteins, egg proteins, soy proteins, caseinates, cotton seed proteins, gelatin and yeast, 1.0 to 2.0% of cake emulsifiers, selected from mono-diglycerides, sodium stearoyl lactylate, lecithin, sorbitan monostearate, poly(oxy-1,2ethanediyl) derivatives of sorbitan monooctadecanoate and diacetyl tartaric acid ester of monoglycerides 0.05 to 0.4% of said shortening replacer, 1.5 to 2,0% of baking powder, selected from baking soda, monocalcium phosphate, sodium aluminum sulfate, calcium sulfate, calcium acid phosphate and sodium acid pyrophosphate, 0.5 to 1.0 parts by weight of sodium chloride, and 25 to 35% of water.

20. The process according to Claim 17 wherein the bakery product is a fruited muffin batter formulation comprising, on a formulation basis 15 to 25% of cake flour, 10 to 20% of bread flour, 25 to 30% of sugar, 0 to 3% of cake shortening, 1.0 to 15.0% of protein from one or more sources, selected from gluten, NFMS, whey proteins, egg proteins, soy proteins, caseinates, cotton seed proteins, gelatin and yeast, 1.0 to 2.0% of cake emulsifiers, selected from one or more sources which are mono-diglycerides, sodium stearoyl lactylate, lecithin, sorbitan monostearate, poly(oxy-1,2ethanediyl) derivatives of sorbitan monooctadecanoate and diacetyl tartaric acid ester of monoglycerides 0.04 to 0.3% of said shortening replacer, 1.5 to 2.0% of baking powder, selected from as baking soda, monocalcium phosphate, sodiumaluminum sulfate, calcium sulfate, calcium acid phosphate and sodium acid pyrophosphate, 0.5 to 1.0 parts by weight of sodium chloride, 10 to 20% of frozen blueberries and 25 to 35% of water.

21. The process according to Claim 17 wherein the bakery product is a devil's food cake batter formulation comprising, on a formulation basis 25% of cake flour, 20 to 35% of sugar, 0 to 2.7% of cake shortening, 3.0 to 10.0% of protein from one or more sources, selected from gluten, NFMS, whey proteins, egg proteins, soy proteins, caseinates, cotton seed proteins, gelatin and yeast, 1.0 to 2.0% of cake emulsifiers, selected from one or more sources which are mono-diglycerides, sodium stearoyl lactylate, lecithin, sorbitan monostearate, polysorbate-60 and diacetyl tartaric acid ester of monoglycerides 0.05 to 0.4% of said shortening replacer, 1.5 to 2.0% of baking powder, selected from baking soda, monocalcium phosphate, sodium aluminum sulfate, calcium sulfate, calcium acid phosphate and sodium acid pyrophosphate, 0.5 to 1.0 parts by weight of sodium chloride, 2.0 to 5.0% of cocoa powder, and 25 to 50% of water.

Fig. 1 Effect of Keltrol-F concentration on viscosity of Keltrol-F and Keltrol-F/NFMS suspensions

## Fig. 2 Effect of Keltrol-F concentration on viscosity of Keltrol-F and Keltrol-F/NFMS suspensions

## FIG. 3 MOBILITY/pH RELATIONSHIP FOR DIFFERENT GUM AND GUM/EMULSIFIER MIXTURES

## Fig. 4 MOBILITY/pH RELATIONSHIP FOR DIFFERENT KELTROL-TF/BI-PRO MIXTURE